# EUROPEAN PATENT APPLICATION

(11) **EP 4 421 611 A1**
(43) Date of publication of application: **28.08.2024**
(21) Application number: 24158212.1
(22) Date of filing: 16.02.2024
(51) Int. Cl.: G06F 3/12

(54) **IMAGE FORMING APPARATUS, CONTROL METHOD THEREFOR, COMPUTER PROGRAM AND STORAGE MEDIUM**

(30) Priority: 22.02.2023 JP 2023025859
(71) Applicant: CANON KABUSHIKI KAISHA, Tokyo 146-8501 (JP)
(72) Inventor: TAKAHASHI, Yasuhiro, Tokyo, 146-8501 (JP)
(74) Representative: Canon Europe Limited

(57) **Abstract**

An image forming apparatus according to an aspect of the present invention includes execution means for executing a print job based on an execution instruction, instruction reception means for receiving an instruction to make a reservation for at least one of a plurality of sheet feed units, and identification means for identifying a sheet feed unit from the plurality of sheet feed units based on a setting for the received print job. Even with issuance of the execution instruction for a print job in which no specific setting is made and the sheet feed unit for which the reservation instruction is received is identified, the execution means does not execute the print job, and the instruction reception means sets a limitation on the reservation instruction to prevent an instruction to make reservations for all the sheet feed units from being issued.

## Description

### BACKGROUND OF THE INVENTION

### Field of the Invention

The present invention relates to an image forming apparatus and a control method for the image forming apparatus.

### Description of the Related Art

There is a technique for printing an image on a sheet fed from a sheet feed source that is designated by a user or is automatically designated based on sheet information from among a plurality of sheet feed sources included in an image forming apparatus (see Japanese Patent Application Laid-Open Publication No. 2005-104614).

For example, after a user sets special paper, such as expensive paper, on one of a plurality of sheet feed sources of an image forming apparatus, another user different from the user that intends to use the set paper can perform printing on the paper using the sheet feed source for another purpose, resulting in waste of the special paper. To avoid this case, it is conceivable that a specific sheet feed source is put into a reserved state in such a manner that the sheet feed source can be used only for a specific job. In this case, if the user makes reservations for two or more sheet feed sources of the image forming apparatus, there is no sheet feed source available for print jobs other than the specific job, which makes it impossible to execute the print jobs.

### SUMMARY OF THE INVENTION

In view of the foregoing issue, the present invention is directed to preventing all sheet feed sources from being reserved in reservation for a sheet feed source of an image forming apparatus.

According to a first aspect of the present invention, there is provided an image forming apparatus as specified in claims 1 to 4. According to a second aspect of the present invention, there is provided an image forming apparatus as specified in claims 5 to 9. According to a third aspect of the present invention, there is provided an image forming method as specified in claim 10. According to a fourth aspect of the present invention, there is provided an image forming method as specified in claim 11. According to a fifth aspect of the present invention, there is provided a computer program as specified in claim 12. According to a sixth aspect of the present invention, there is provided a computer-readable data carrier as specified in claim 13.

Further features of the present invention will become apparent from the following description of embodiments with reference to the attached drawings.

### BRIEF DESCRIPTION OF THE DRAWINGS

Fig. 1A is a front view of an image forming apparatus, and Fig. 1B is a schematic view of a printer engine.
Fig. 2 is a block diagram illustrating a configuration example of an entire system including the image forming apparatus.
Fig. 3 is a block diagram illustrating details of a sheet feed unit.
Fig. 4 is a flowchart illustrating sheet feed source reservation processing in print processing.
Fig. 5 illustrates an example of a home screen of the image forming apparatus.
Fig. 6 illustrates an example of a settings screen of the image forming apparatus.
Fig. 7 illustrates an example of a sheet settings screen of the image forming apparatus.
Fig. 8 is a flowchart illustrating printer driver processing for generating a print job.
Fig. 9 illustrates an example of a printing condition settings screen to be displayed by driver software.
Fig. 10 is a flowchart illustrating printer processing to be executed by the image forming apparatus.
Fig. 11 is a flowchart illustrating contents of page generation processing in printer processing.
Fig. 12 is a flowchart illustrating contents of print processing in printer processing.
Fig. 13 is a flowchart illustrating contents of sheet feed determination processing in print processing.
Fig. 14 illustrates an example of an out-of-paper error screen of the image forming apparatus.
Fig. 15 illustrates an example of a sheet feeding location reservation setting screen of the image forming apparatus.
Fig. 16 illustrates an example of the sheet feeding location reservation screen of the image forming apparatus.
Fig. 17 illustrates an example of an error screen of the image forming apparatus.
Fig. 18 illustrates an example of the sheet feeding location reservation screen of the image forming apparatus.
Fig. 19 illustrates an example of the settings screen of the image forming apparatus.
Fig. 20 illustrates an example of a reservation management screen of the image forming apparatus.
Fig. 21 illustrates an example of the sheet feeding location reservation screen of the image forming apparatus.
Fig. 22 illustrates an example of the reservation management screen of the image forming apparatus.
Fig. 23 illustrates an example of the sheet feeding location reservation screen of the image forming apparatus.
Fig. 24 illustrates an example of the reservation management screen of the image forming apparatus.
Fig. 25 illustrates an example of the sheet feeding location reservation screen of the image forming apparatus.
Fig. 26 illustrates an example of the sheet feeding location reservation screen of the image forming apparatus.
Fig. 27 illustrates an example of the sheet feeding location reservation screen of the image forming apparatus.

### DESCRIPTION OF THE EMBODIMENTS

Embodiments of the present invention will be described in detail with reference to the accompanying drawings. The following embodiments are not meant to limit the scope of the present invention encompassed by the claims, and not all combinations of features described in the embodiments are necessarily deemed to be essential.

An image forming apparatus according to a first embodiment of the present disclosure will be described with reference to the drawings. Examples of the image forming apparatus include a printer, a copying machine, a facsimile machine, and a multifunction peripheral (MFP) including these functions, and the image forming apparatus has a function (printing function) of forming images on sheets as recording media.

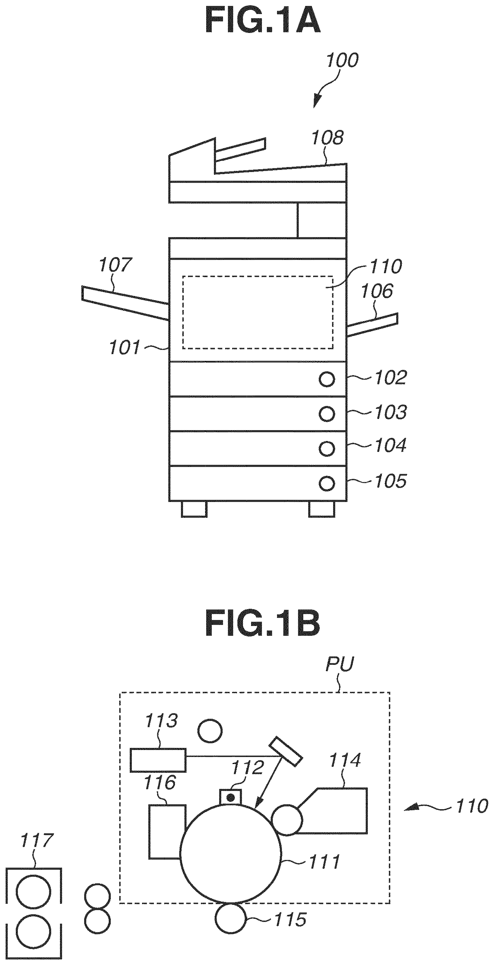

An image forming apparatus 100 illustrated in Fig. 1A is an MFP that forms images on sheets. Examples of the sheets include paper, such as a sheet of paper and an envelope, a plastic film, such as a sheet for an overhead projector (OHP), and cloth. In the drawings and the descriptions below, the terms related to sheets, such as "sheet" and "sheet feed", herein used generally indicate sheets including any type of sheets other than paper, unless otherwise specified.

The image forming apparatus 100 includes devices, such as a printer unit 101, a scanner unit 108, a plurality of sheet feed cassettes 102, 103, 104, and 105, a manual feed tray 106, and a discharge tray 107. The sheet feed cassettes 102, 103, 104, and 105 and the manual feed tray 106 are hereinafter collectively referred to as a sheet feed source if there is no need to distinguish them from each other.

The scanner unit 108 functioning as an image reading device optically scans an original, and converts scanned data into electronic image information using a photoelectric conversion element of a charge-coupled device (CCD) system or the like. The printer unit 101 causes a printer engine 110, which is an example of an image forming unit, to form an image on a sheet based on image information input from the scanner unit 108 or an external host computer. The sheet feed cassettes 102 to 105 each accommodate sheets, and the manual feed tray 106 supports sheets placed on the tray. The sheets held on the sheet feed cassettes 102 to 105 and the manual feed tray 106 are separated one by one and fed to the printer engine 110 by a sheet feed unit (not illustrated). The sheet feed cassettes 102 to 105 and the manual feed tray 106 are examples of a sheet feed source on which sheets to be supplied to the image forming unit are held. The sheets on which images are formed by the printer engine 110 are discharged onto the discharge tray 107 functioning as a discharge unit.

As illustrated in Fig. 1B, the printer engine 110 includes an electrophotographic image formation unit PU. The image formation unit PU includes a photosensitive drum 111 as a drum-like photosensitive member, a charging device 112, an exposure device 113, a developing device 114, and a cleaning device 116. If a request for starting an image forming operation is issued to the printer engine 110, the charging device 112 uniformly charges the surface of the photosensitive drum 111, and the exposure device 113 scans the surface of the photosensitive drum 111 with laser light and forms an electrostatic latent image on the surface of the photosensitive drum 111. The developing device 114 supplies charged toner to the photosensitive drum 111 and develops the electrostatic latent image into a toner image. The toner image carried on the surface of the photosensitive drum 111 is transferred onto a sheet by a transfer device 115. The toner image transferred onto the sheet is fixed to the sheet by a fixing device 117 of, for example, a heat fixing system.

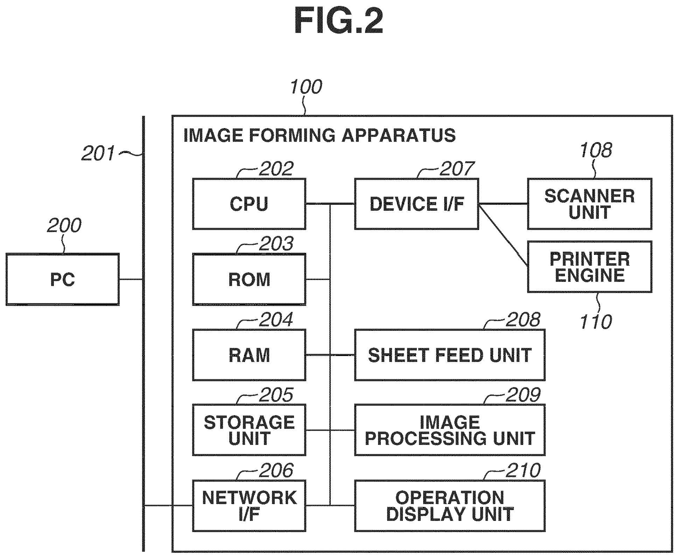

Next, an image forming system including the image forming apparatus 100 will be described with reference to Fig. 2.

The image forming apparatus 100 is connected to a wired or wireless network via a network interface (I/F) 206, and communicates with an information processing apparatus, such as a personal computer (PC) 200.

A printer driver is installed on the PC 200 as driver software for generating a job (hereinafter referred to as a print job) to issue an image forming instruction to the image forming apparatus 100. The printer driver generates a print job described in page description language (PDL) based on document data received from, for example, a document creation application on the PC 200. Examples of the PDL include PostScript (PS), Printer Control Language (PCL), and Laser beam printer Image Processing System (LIPS)^{®}. The PC 200 includes a control unit, such as a central processing unit (CPU), and storage units, such as a read-only memory (ROM), a random access memory (RAM), and a hard disk drive (HDD). The printer driver transmits generated print jobs to the image forming apparatus 100 via a network.

The image forming apparatus 100 is controlled by a CPU 202, and the CPU 202 operates based on programs stored in a RAM 204. A ROM 203 is a boot ROM and stores system boot programs. A storage unit 205 stores system software, image data, programs for controlling operations of the image forming apparatus 100, and the like. Programs stored in the storage unit 205 are loaded into the RAM 204, and the CPU 202 controls operations of the image forming apparatus 100 based on the programs. In the following description, unless otherwise specified, each step in a control process for the image forming apparatus 100 is executed by the CPU 202.

An image processing unit 209 performs image processing on image data received via the network I/F 206, and performs image processing on image data to be input to and output from a device I/F 207. The image data transmitted from the PC 200 is converted into image data in a raster format by the image processing unit 209, and the image data is stored in the storage unit 205. The stored image data is transmitted as a video signal to the printer engine 110 via the device I/F 207, and is used in the image forming operation by the printer engine 110.

The image forming apparatus 100 also includes an operation display unit 210 that functions as a display unit that displays information for users and also functions as an input unit that receives instructions from users. The operation display unit 210 includes a screen display unit including a display, such as a liquid crystal display (LCD), and an operation input unit including a touch panel that functions as software keys that are located on the display and operate based on a positional relationship between a location where an operation is performed and an operation target displayed on the display, and hardware keys, such as numeric keypads.

The CPU 202 of the image forming apparatus 100 controls a sheet feed unit 208 including the sheet feed cassettes 102 to 105 and the manual feed tray 106. The sheet feed unit 208 will be described in detail below.

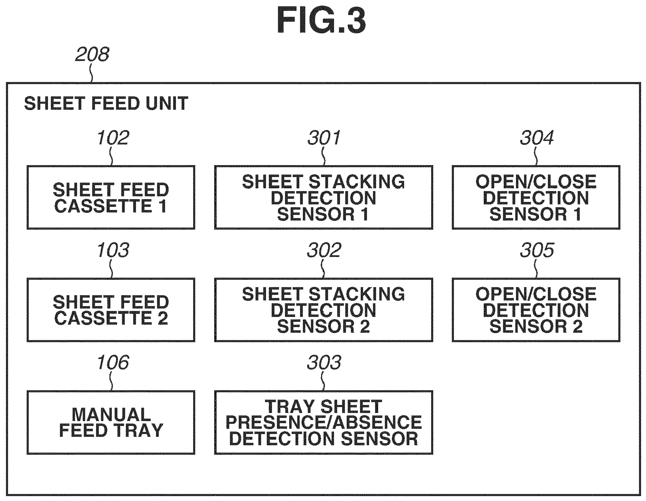

Fig. 3 is a block diagram illustrating detailed functions of the sheet feed unit 208 of the image forming apparatus 100. The sheet feed unit 208 supplies sheets to the printer engine 110. The CPU 202 controls the sheet feed cassettes 1 (102) to 4 (105) and the manual feed tray 106 in the sheet feed unit 208 to feed sheets from one of the sheet feed cassettes 102 to 105 and the manual feed tray 106 each functioning as a sheet feed source. The sheet feed cassettes (102, 103) are provided with sheet stacking detection sensors (301, 302), respectively, to detect the amount of paper stacked on the respective cassettes. This enables the CPU 202 to detect whether paper is not present on the currently-set sheet feed cassette, or detect the amount of paper placed on the sheet feed cassette in a range of about several levels. Similarly, the sheet feed cassettes (102, 103) are provided with open/close detection sensors (304, 305), respectively, to detect open/close states of the respective sheet feed cassettes. This enables the CPU 202 to detect the open/close states of the sheet feed cassettes in real time as an event from the open/close detection sensors. Although not illustrated in Fig. 3, each of the sheet feed cassettes 3 (104) and 4 (105) is also provided with a sheet stacking detection sensor and an open/close detection sensor.

The manual feed tray 106 is provided with a tray sheet presence/absence detection sensor 303 to detect whether paper is placed on the tray. This enables the CPU 202 to detect paper placed on the manual feed tray 106 or no paper on the manual feed tray 106 after paper is removed from the manual feed tray 106 in real time as an event from the tray sheet presence/absence detection sensor 303.

### (Image Forming Processing Flow)

A procedure of image forming processing to be executed according to the present embodiment will be described. In the present embodiment, sheet feed source reservation processing is performed before the image forming processing is executed. The sheet feed source reservation processing refers to processing for setting a limitation on the use of the sheet feed cassettes 102 to 105 and the manual feed tray 106 on which sheets to be used for image formation are placed. The sheet feed source reservation processing will be described in detail below. After that, the PC 200 generates a print job through printer driver processing, and outputs the generated print job to the image forming apparatus 100. When the print job is input to the image forming apparatus 100, the image forming apparatus 100 executes printer processing to process the print job. Next, each piece of processing will be described in detail.

### (Sheet Feed Source Reservation Processing)

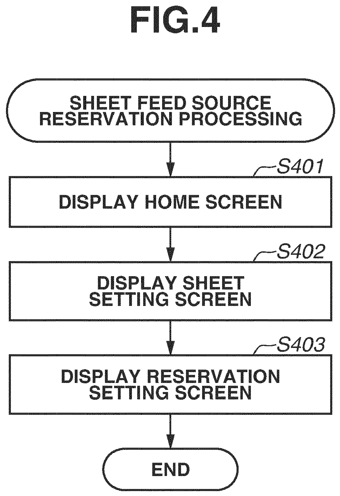

The sheet feed source reservation processing will be described with reference to a flowchart illustrated in Fig. 4. In the present embodiment, it is assumed that the user places the following special sheets on the sheet feed cassette 102, and performs a reservation operation.

### Sheet Size: A4

### Sheet Type: Coated Paper

First, the user places the above-described special sheets on the sheet feed cassette 102. Then, the user operates the operation display unit 210 of the image forming apparatus 100 to set the size and type of the placed sheets.

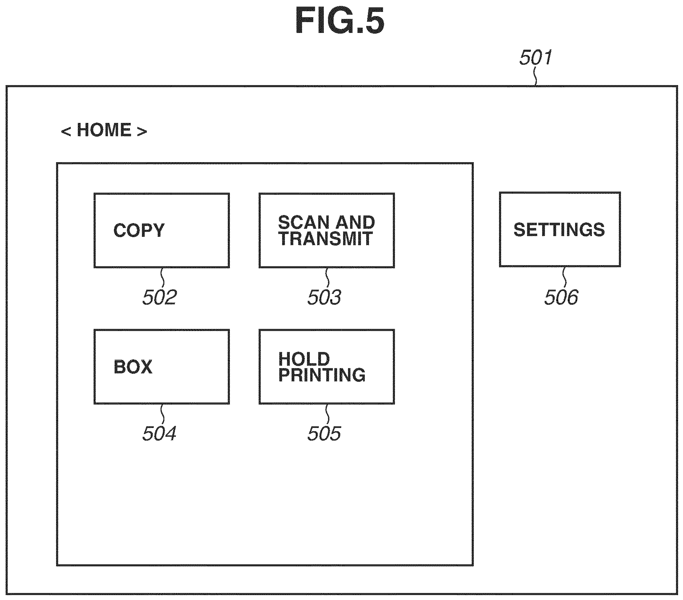

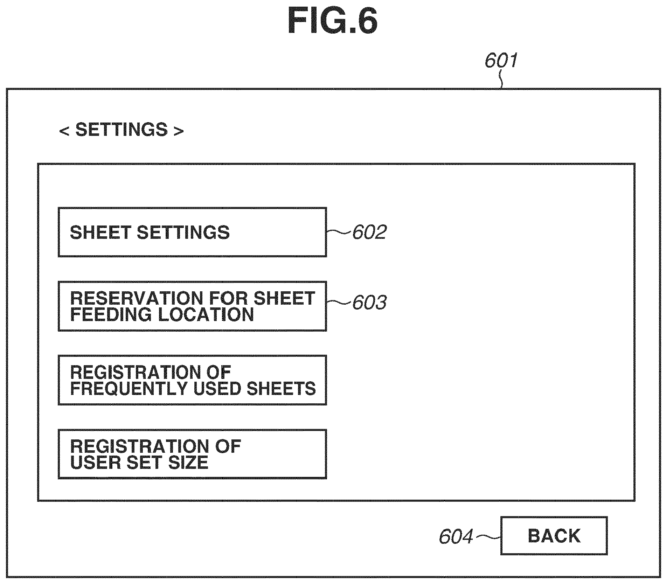

In step S401, the CPU 202 of the image forming apparatus 100 causes the operation display unit 210 to display a home screen 501 illustrated in Fig. 5, and waits for an operation from the user. On the home screen 501, a button 502 to be selected to use a copy function, a button 503 to be selected to use a transmission function, and a button 504 to be selected to use a box function are arranged. A button 505 is a button to be selected to use a hold printing function. A settings button 506 is used to make various settings for the image forming apparatus 100. Also, in setting the size and type of the sheets placed by the user and making a reservation for a sheet feed source, the settings button 506 is pressed. Upon detecting pressing of the settings button 506, the CPU 202 of the image forming apparatus 100 displays a settings screen 601 illustrated in Fig. 6 for the user to select various setting items. On the settings screen 601 illustrated in Fig. 6, a button 602 for making sheet settings, a button 603 for making a sheet feeding location reservation setting, which is a most characteristic feature of the present invention, and other buttons are arranged.

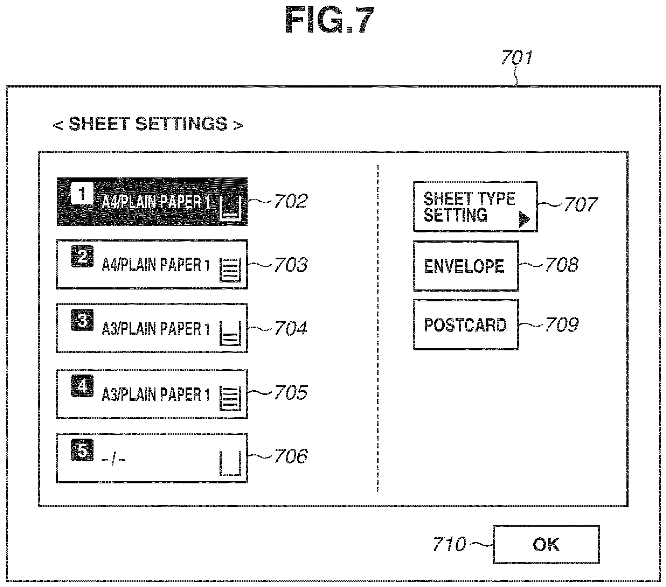

Upon detecting pressing of the button 602 from among the various setting items, in step S402, the CPU 202 displays a sheet settings screen 701 for making sheet settings as illustrated in Fig. 7. On the sheet settings screen 701, sheet feed source selection buttons 702 to 706 are displayed and a setting status of the corresponding sheet feed source is displayed on each of the sheet feed source selection buttons 702 to 706. Display contents will be described below. On the sheet settings screen 701, a button 707 for changing the sheet type and buttons 708 and 709 for setting sheet sizes for special paper, such as an envelope and a postcard, are also arranged. The buttons 707 to 709 are operated after any one of the sheet feed source selection buttons 702 to 706 is selected.

The display of each sheet feed source setting status will be described in detail. Each sheet feed source setting status is held as sheet feed source information in the storage unit 205 of the image forming apparatus 100 as indicated in the following Table 1. Sheet Size 2802 in Table 1 represents a size that is automatically detected or is set by the user when a sheet is placed on each sheet feed source. Sheet Type 2803 represents a sheet type set via the sheet type setting button 707. Number of Remaining Sheets 2804 represents the number of remaining sheets detected on each sheet feed source in the range of five levels. Reserved State 2805 in Table 1 represents the reserved state of each sheet feed source, which is the most characteristic feature of the present invention, and is set via the sheet feeding location reservation setting button 603 to be described below. In the following Table 1, the reserved state (2805) fields for all the sheet feed cassettes 102 to 105 and the manual feed tray 106 are blank, which indicates that all the sheet feed cassettes are available for any user.

**[Table 1] Each Sheet Feed Source Setting Status**

| Sheet Feed Source (2801) | Sheet Size (2802) | Sheet Type (2803) | Number of Remaining Sheets (2804) | Reserved State (2805) |
|---|---|---|---|---|
| Sheet Feed Cassette 102 | A4 | Plain Paper 1 | 25% | - |
| Sheet Feed Cassette 103 | A4 | Plain Paper 1 | 100% | - |
| Sheet Feed Cassette 104 | A3 | Plain Paper 1 | 50% | - |
| Sheet Feed Cassette 105 | A3 | Plain Paper 1 | 100% | - |
| Manual Feed Tray 106 | Not Set | Not Set | 0% | - |

Next, an operation to be performed when a certain sheet feed source is selected (assuming herein that the button 702 corresponding to the sheet feed cassette 102 is selected) and the button 707 is pressed will be described. Upon detecting pressing of the button 707, the CPU 202 of the image forming apparatus 100 causes the operation display unit 210 to display a sheet type setting screen (not illustrated), and waits for the user to select and determine the sheet type. When the user determines the sheet type (assuming herein that coated paper is selected), the CPU 202 updates the sheet feed source information with the determined sheet type, and completes the sheet type setting processing.

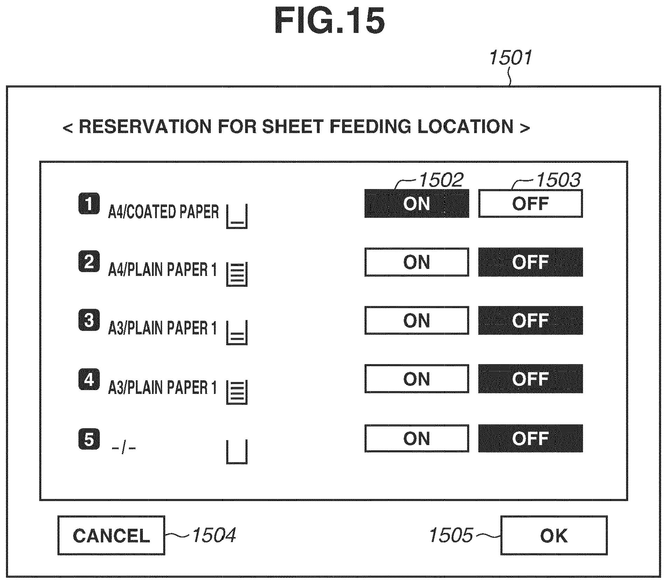

Next, an operation for making a reservation for a sheet feed source will be described. An operation for making a reservation for the sheet feed cassette 102 will now be described by way of example. To make a reservation for a sheet feed source, the button 603 for making the sheet feeding location reservation setting on the settings screen 601 described above is used. Upon detecting pressing of the button 603 for making the sheet feeding location reservation setting, in step S403, the CPU 202 causes the operation display unit 210 to display a sheet feeding location reservation setting screen 1501 illustrated in Fig. 15.

On the sheet feeding location reservation setting screen 1501, a button 1502 for turning on the reservation setting for each sheet feed source, and a button 1503 for turning off the reservation setting for each sheet feed source are displayed. A button 1504 for cancelling the reservation operation and a button 1505 for determining the reservation operation are also arranged. On the sheet feeding location reservation setting screen 1501, the button 1502 corresponding to the sheet feed cassette 102 is selected, which indicates that the sheet feed cassette 102 is in the reserved state. Upon detecting that the button 1505 for determining the reservation operation is pressed by the user in this state, the CPU 202 records information indicating "reserved" on the Reserved State (2805) field in the sheet feed source information held in the storage unit 205. This allows sheet feeding from the sheet feed cassette 102 only for a print job in which "use the reserved sheet feed source" is set in step S805 to be described below. To cancel the reservation operation, the button 1503 for cancelling the reservation operation is pressed on the sheet feeding location reservation setting screen 1501, to clear the information indicating the reserved state in the sheet feed source information held in the storage unit 205. A detailed sheet feeding operation on the reserved sheet feed source will be described below in sheet feed determination processing. The reception of a reservation instruction illustrated in Fig. 15 is an example of an instruction reception configuration.

Table 2 indicates what changes are made to the sheet feed source information indicated in Table 1 through the change of the sheet type and the reservation processing.

**[Table 2] Each Sheet Feed Source Setting Status**

| Sheet Feed Source (2801) | Sheet Size (2802) | Sheet Type (2803) | Number of Remaining Sheets (2804) | Reserved State (2805) |
|---|---|---|---|---|
| Sheet Feed Cassette 102 | A4 | Coated Paper | 25% | Reserved |
| Sheet Feed Cassette 103 | A4 | Plain Pape 1 | 100% | - |
| Sheet Feed Cassette 104 | A3 | Plain Pape 1 | 50% | - |
| Sheet Feed Cassette 105 | A3 | Plain Pape 1 | 100% | - |
| Manual Feed Tray 106 | Not Set | Not Set | 0% | - |

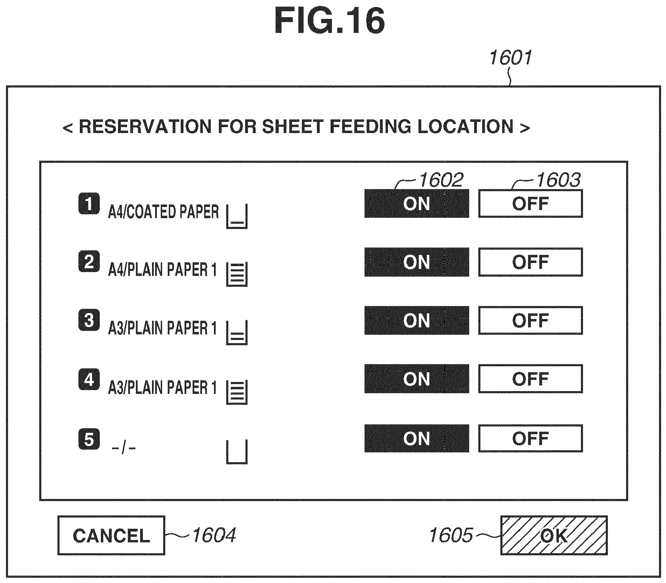

Next, processing for setting a limitation on the sheet feeding location reservation operation will be described with reference to Fig. 16. Fig. 15 described above illustrates a state where the reservation setting is made for only the sheet feed cassette 102, while Fig. 16 illustrates a state where the reservation buttons corresponding to all the sheet feed sources are selected. In this setting state, an OK button 1605 for determining the reservation operation is displayed in a hatch pattern, and the CPU 202 performs screen control processing to prevent the user from pressing the OK button 1605. This is because if the user is allowed to put all the sheet feed sources into the reserved state at once, printing for print jobs in which settings using the printer driver as described below (settings for using sheets placed on the reserved sheet feed source) are not made cannot be executed.

More specifically, the screen control processing is performed to prevent such a state that printing of normal office documents cannot be executed from occurring.

While Fig. 16 illustrates an example of processing for setting a limitation on the reservation operation for all the sheet feed sources at once by displaying the OK button 1605 in a hatch pattern, there is another method for setting a limitation as described below.

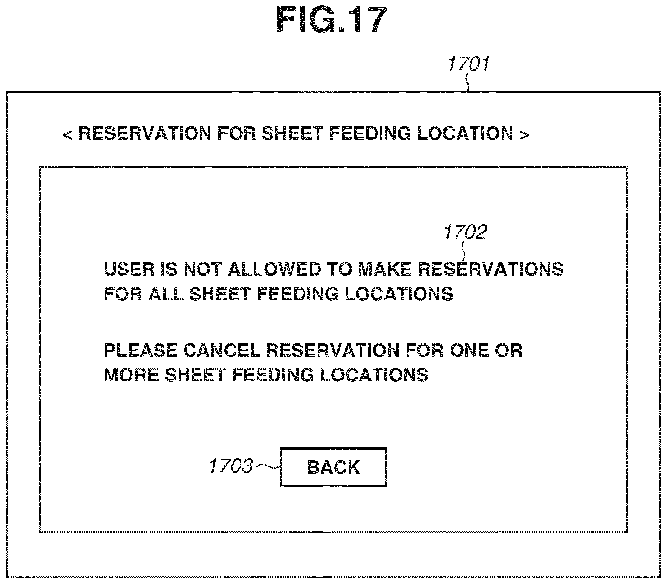

Fig. 17 illustrates an example of processing for setting a limitation by displaying an error screen. Specifically, the OK button 1605 can be pressed in a state where the reservation buttons corresponding to all the sheet feed sources are selected. However, in this case, the CPU 202 performs screen control processing to prevent the reservation operation from being determined by displaying an error screen 1701. On the error screen 1701, an error reason 1702 and a back button 1703 for returning to a sheet feeding location reservation setting screen 1601 are displayed, and an error notification is issued. On the other hand, if the OK button 1605 is pressed on the sheet feeding location reservation setting screen 1601 with one or more sheet sources for which the reservation setting is not made, the CPU 202 determines the reservation operation without displaying the error screen 1701. The error screen 1701 may be displayed when the OK button 1605 is selected, or may be displayed at a timing when the buttons 1602 corresponding to all the sheet feed sources are selected.

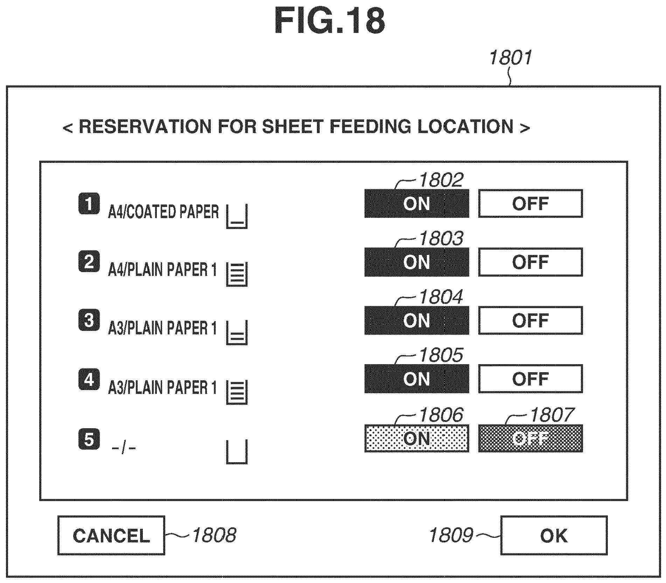

Fig. 18 illustrates another example of processing for setting a limitation in such a manner that the CPU 202 performs screen control processing to prevent the user from changing the reservation setting for the last sheet feed source that is not in the reserved state. For example, on a sheet feeding location reservation setting screen 1801 illustrated in Fig. 18, reservation setting buttons 1802 to 1805 corresponding to the sheet feed cassettes 102 to 105, respectively, are selected to put the sheet feed cassettes 102 to 105 into the reserved state. In this case, the CPU 202 performs screen control processing in such a manner that buttons 1806 and 1807 corresponding to the manual feed tray 106 that is not reserved and corresponds to the last sheet feed source are displayed in shaded patterns. As described above, if one of the plurality of sheet feed sources is not in the reserved state, the CPU 202 can prevent the reservation setting for the sheet feed source from being made. Examples of the configuration for preventing the reservation setting for the sheet feed source from being made include a configuration for displaying the button 1806 illustrated in Fig. 18 in a shaded pattern to prevent the button 1806 from being selected, a configuration for hiding the button 1806, and a configuration in which the setting corresponding to the button 1806 to be selected is not reflected although the button 1806 can be selected. This prevents the user from changing the reservation setting. Consequently, the state in which all the sheet feed sources are put into the reserved state at once can be avoided. In other words, a limitation can be set on the user so that the user cannot issue an instruction to make reservations for all the sheet feed units. Moreover, even when an instruction to make reservations for all the plurality of sheet feed units is received, the reservation operation for all the plurality of sheet feed units is not executed based on the instruction.

### (Printer Driver Processing)

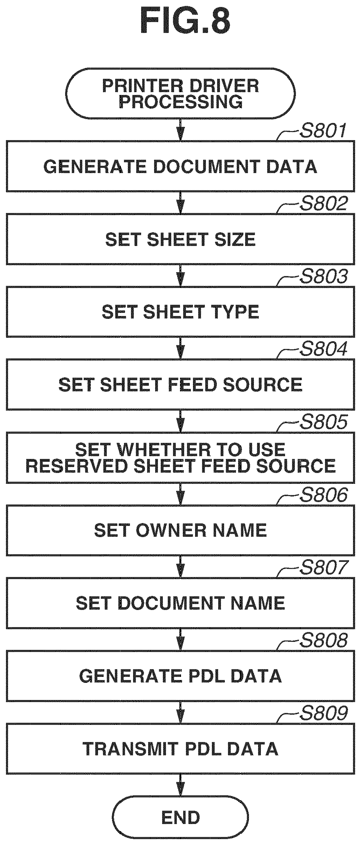

Next, printer driver processing will be described with reference to a flowchart illustrated in Fig. 8. The following steps are carried out by a control unit, such as a CPU in the PC 200, executing programs constituting the printer driver. The printer driver processing is started when the user of the PC 200 performs an operation to issue an instruction for executing printing on, for example, the document creation application. In step S801, document data indicating contents (document, figure, etc.) to be printed is generated in advance using the document creation application or the like.

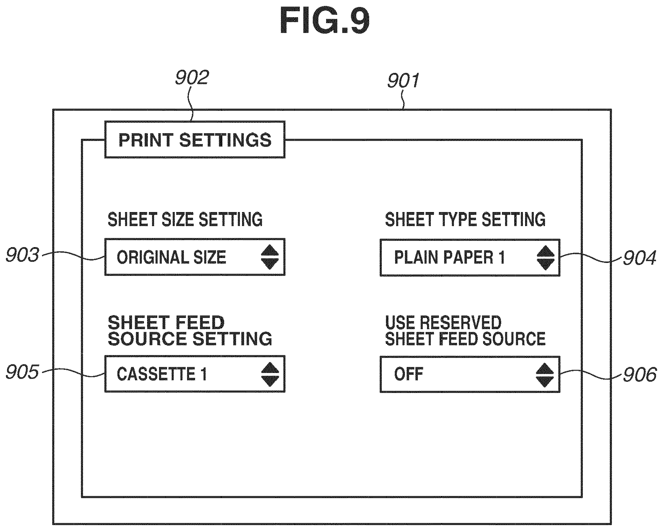

In steps S802 to S805, setting processing for setting attribute information for a print job is performed based on a user operation signal for the PC 200. Specifically, as illustrated in Fig. 9, a print settings screen 901 for setting print conditions is displayed on the display of the PC 200, so that the PC 200 is ready for receiving a user operation. A tab 902 indicates that a print settings screen is displayed.

A setting value for a sheet size is displayed on a sheet size setting field 903. A setting value for a sheet type is displayed on a sheet type setting field 904. A sheet feed source to be designated as a sheet feed source from which sheets are supplied is displayed on a sheet feed source setting field 905. As the sheet size, an "original size" for designating a sheet size identical to the sheet size designated in document data, a standard size, such as "A4", a user-defined size for which values are input by the user, and the like can be selected. As the sheet type, setting values for "plain paper 1", "plain paper 2" with larger grammage than "plain paper 1", "coated paper", and the like can be selected. As the sheet feed source, any one of the sheet feed cassettes 102 to 105 and the manual feed tray 106 can be selected. An option, such as "auto select", for allowing the image forming apparatus 100 to perform selection processing may be provided for each sheet type and each sheet feed source. Further, a button 906 for setting ON/OFF for "use sheets placed on the reserved sheet feed source", which is a characteristic feature of the present invention, is displayed on the tab 902. Turning "ON" the button 906 makes it possible to execute printing using the sheets placed on the reserved sheet feed source as described below.

The driver software makes settings for information for designating a sheet size, a sheet type, a sheet feed source from which sheets are fed, and use of the reserved sheet feed source based on the user operation signal transmitted via the print settings screen 901.

Next, in steps S806 and S807, the printer driver sets an owner name and a document name for the print job. The owner name is information for identifying the user that has created the print job. In the present embodiment, an identification (ID) for the user that has currently logged into the PC 200 is used as the owner name. The document name is information for identifying a data file of a document, a figure, or the like to be printed. For example, the document name is obtained from the application used to generate the document data.

In step S808, the printer driver generates PDL data based on a PDL format based on the document data and various settings information. The PDL data includes page data indicating drawing contents of each page and settings information (sheet size, sheet type, sheet feed source, owner name, document name, etc.) for the print job. The page data is image information generated by the printer driver from the document data based on the PDL format. In step S809, the generated PDL data is transmitted to the image forming apparatus 100 via a network.

### (Printer Processing)

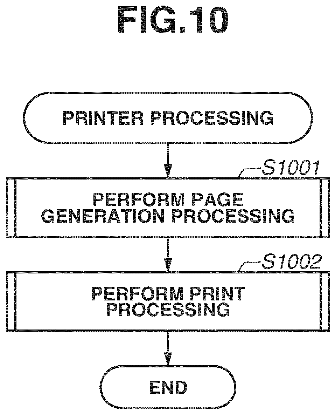

When a signal indicating the PDL data reaches the image forming apparatus 100, the CPU 202 of the image forming apparatus 100 starts printer processing. As illustrated in Fig. 10, the printer processing roughly includes page generation processing (step S1001) for generating image data for each page, and print processing (step S1002) for forming an image on a sheet based on the image data.

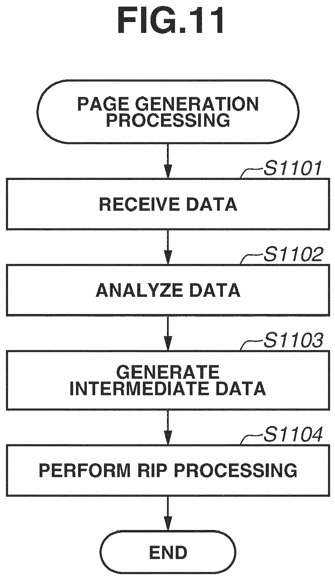

First, the contents of page generation processing will be described with reference to a flowchart illustrated in Fig. 11. In step S1101, the print job transmitted from the PC 200 is temporarily stored in the storage unit 205. The processing of step S1101 is an example of the job reception configuration. For example, instead of using the configuration for receiving a print job, a configuration for receiving a copy processing setting and an execution instruction on the operation display unit 210 of the image forming apparatus 100 may be used as the job reception configuration. If PDL data is received, the reception of the print job (PDL data) may correspond to the reception of an instruction to execute the print job. Alternatively, an execution instruction for the received print job may be separately received by operation display unit 210 and the print job may be executed. The print job stored in the storage unit 205 includes page data as image information based on the PDL format. In step S1102, this page data is analyzed by the CPU 202. In step S1103, the page data is converted into intermediate data. The intermediate data is a general term for drawing objects, such as bitmap data, run-length data, a trapezoid, a box, and bitmap data that has been subjected to high-speed boundary encoding, a background pattern, and a drawing logic for drawing an image in the raster format from the drawing objects and the background pattern. Setting information for the print job, such as a sheet size included in the PDL data, is extracted through analysis made by the CPU 202, and is stored in the storage unit 205.

In step S1104, the image processing unit 209 performs raster image processing (RIP) on the intermediate data and stores the intermediate data in the storage unit 205. The RIP refers to processing for generating image data in the raster format based on image data, such as a vector image.

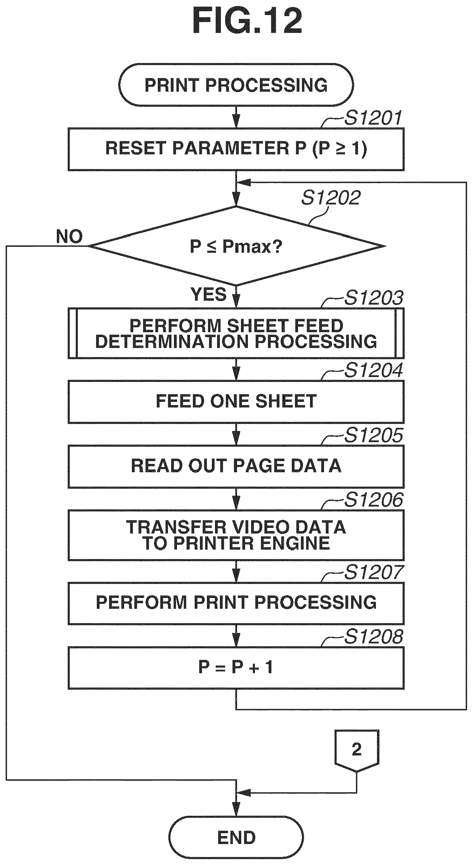

Next, the contents of print processing will be described with reference to a flowchart illustrated in Fig. 12. When the print processing is started, in step S1201, the CPU 202 resets a parameter P representing a page in process (current sheet). The parameter P is an integer value that satisfies P ≥ 1. In step S1202, the CPU 202 determines whether the parameter P exceeds a variable Pmax representing a total number of pages (the number of sheets designated in the print job). As long as P ≤ Pmax is satisfied, the CPU 202 repeatedly executes the subsequent processing (steps S1203 to S1208). It is assumed that the variable Pmax is extracted through analysis of PDL data and is stored in the storage unit 205.

In step S1203, the CPU 202 first obtains information about the sheet feed source setting (see step S804 in Fig. 8) by referring to the storage unit 205, and performs sheet feed determination processing of determining whether sheets can be fed from the designated sheet feed source. The contents of the sheet feed determination processing will be described in detail below. When it is determined that sheets can be fed from the designated sheet feed source by the sheet feed determination processing, in step S1204, the sheets are fed one by one. In step S1205, the CPU 202 reads out image data on the sheets in process from the storage unit 205. In step S1206, the image data is converted into video data and the video data is transferred to the printer engine 110. In step S1207, the printer engine 110 executes print processing (image forming step) on the sheets based on the video data. In step S1208, the CPU 202 increments the parameter P.

If the image forming processing on the sheets corresponding to the total number of pages (Pmax) is completed (NO in step S1202), the print processing is completed.

### (Sheet Feed Determination Processing)

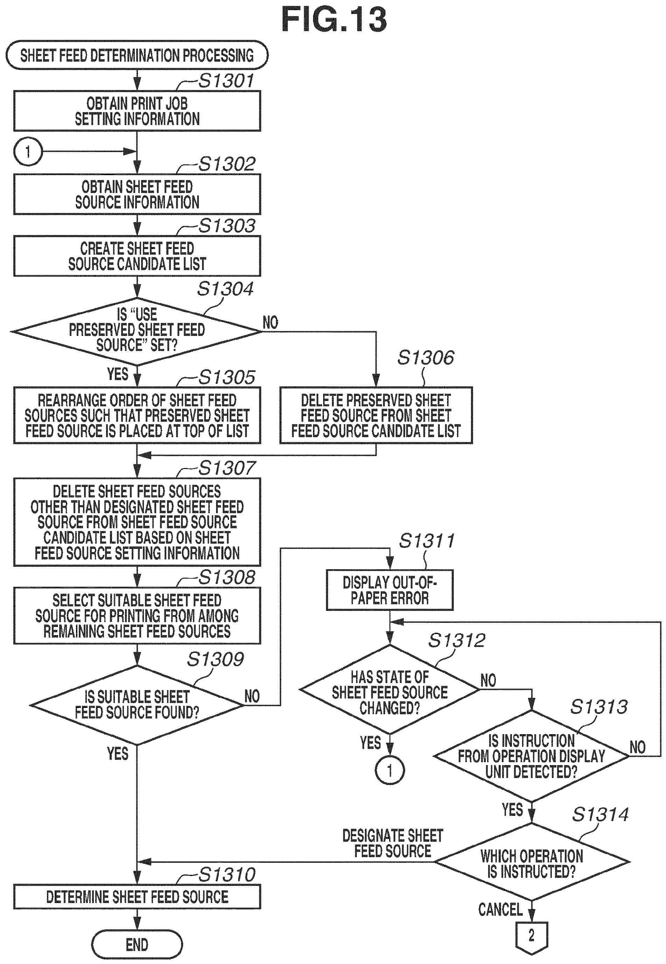

Next, the sheet feed determination processing (step S1203) will be described with reference to a flowchart illustrated in Fig. 13. In the sheet feed determination processing, in step S1301, the CPU 202 first obtains print job setting information stored in the storage unit 205 in step S1102. The print job setting information includes a sheet size, a sheet type, sheet feed source setting information, and setting information indicating whether to use the reserved sheet feed source. Next, in step S1302, the CPU 202 obtains sheet feed source information stored in the storage unit 205. The sheet feed source information is setting information about each sheet feed source indicated in Table 2 described above. In step S1303, the obtained sheet feed source information is copied to create a sheet feed source candidate list, which is used to determine a sheet feed source to be a sheet feed source candidate in the subsequent processing.

Next, in step S1304, the CPU 202 changes the subsequent operation depending on the settings for use of the reserved sheet feed source for the print job obtained in step S1301. If "use the reserved sheet feed source" is set in the job (YES in step S1304), the processing proceeds to step S1305. In step S1305, the order of the sheet feed sources is rearranged in such a manner that the "reserved" sheet feed source is placed at the top of the sheet feed source candidate list created in step S1303. Thus, the reserved sheet feed source can be preferentially selected in suitable sheet feed source selection processing (step S1308) to be described below.

On the other hand, if "use the reserved sheet feed source" is not set in the job (NO in step S1304), the processing proceeds to step S1306. In step S1306, the "reserved" sheet feed source in the reserved state (1805) is deleted from the sheet feed sources in the sheet feed source candidate list. For example, if "use the reserved sheet feed source" is not set in the print job as indicated by the sheet feed source reservation status in Table 2, the sheet feed cassette 102 is deleted from the sheet feed source candidate list. In the processing of step S1308, the sheet feed sources that are not in the "reserved" state may be excluded from candidates, instead of rearranging the sheet feed sources in order of priority.

On the other hand, if "use the reserved sheet feed source" is set in the print job, there is no sheet feed source to be deleted from the sheet feed source candidate list. This configuration allows sheet feeding from the sheet feed source in the reserved state (1805) to be performed only in the print job in which "use the reserved sheet feed source" is set.

Next, in step S1307, the CPU 202 refers to the sheet source setting information from the print job setting information obtained in step S1301 and deletes the sheet feed sources other than the designated sheet feed source from the sheet feed source candidate list. The sheet feed source setting information is information designated on the sheet feed source setting field 905. If a specific sheet feed source is designated on the sheet feed source setting field 905, the sheet feed sources other than the designated sheet feed source are deleted from the sheet feed source candidate list, and if automatic selection is set, no sheet feed sources are deleted from the sheet feed source candidate list.

Next, in step S1308, the CPU 202 selects a suitable sheet feed source from the remaining sheet feed sources in the sheet feed source candidate list. Specifically, sheet feed sources on which sheets whose sheet size and sheet type are suitable for printing and are described in the print job setting information are held are searched for in order from the top sheet feed source in the sheet feed source candidate list. In step S1309, the subsequent processing is changed depending on the sheet feed source search result. If the suitable sheet feed source is found (YES in step S1309), the processing proceeds to step S1310. In step S1310, a notification indicating the found sheet feed source is transmitted to the subsequent step, and then the sheet feed determination processing is completed. The sheet feed source with the highest priority among the found sheet feed sources is set as the sheet feed source to be used for the print job.

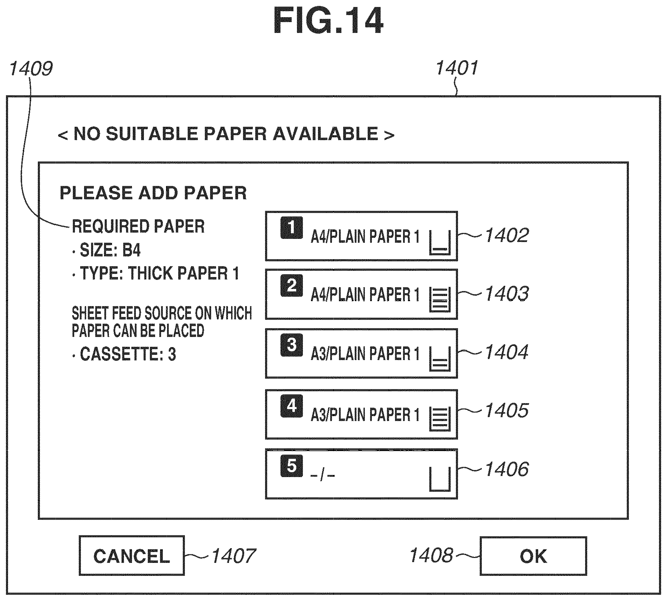

On the other hand, if it is determined that the suitable sheet feed source is not found (NO in step S1309), the processing proceeds to step S1311. In step S1311, the CPU 202 displays an out-of-paper error screen 1401 illustrated in Fig. 14 on the operation display unit 210 of the image forming apparatus 100. On the out-of-paper error screen 1401, sheet information (size and type) used to continue the print job and a message 1409 indicating the sheet feed source on which the sheets can be placed are displayed. The sheet feed source candidate list obtained after the processing of step S1307 is searched for the sheet feed source on which the sheets can be placed.

The same error screen may be displayed in step S1309 any time when there is no suitable sheet feed source, or the error screen may be changed depending on conditions. For example, if the sheet feed source designated in the print job is a reserved sheet feed source with "use the reserved sheet feed source" not set in the print job, information indicating that the sheet feed source designated in the print job is reserved may be displayed. In this case, the message 1409 or the like may also be displayed. Further, if no sheet feed source is designated in the print job and all the sheet feed sources identified based on the sheet size designated in the print job are reserved sheet feed sources with "use the reserved sheet feed source" not set in the print job, another screen may be displayed. Specifically, the screen may include a message indicating that all the sheet feed sources for which the designated sheet size is stored are reserved. Also, in this case, the message 1409 or the like may also be displayed. Further, if the sheet feed source designated in the print job is a reserved sheet feed source and no sheets are placed on the sheet feed source with "use the reserved sheet feed source" set in the print job, the out-of-paper error screen 1401 illustrated in Fig. 14 may be displayed.

When the out-of-paper error screen 1401 illustrated in Fig. 14 is displayed, the user can perform one of the following operations:
- placing sheets of the sheet type (B4-size thick paper 1 in Fig. 14) described in the message 1409 on the sheet feed source (cassette 3 in Fig. 14) described in the message 1409 to clear the out-of-paper error;
- pressing one of sheet feed source selection buttons 1402 to 1406 to forcibly continue the processing using sheets and a sheet feed source that are different from the sheets and the sheet feed source designated in the message 1409; and
- pressing a cancel button 1407 to cancel the print job.

The CPU 202 waits for the user to perform one of the above-described operations. If some change in the state of each sheet feed source is detected (YES in step S1312), the user may have placed sheets, and the processing returns to step S1302. In step S1302, the suitable sheet feed source search processing is performed again. The change in the state of each sheet feed source is, for example, a change in the sheet size of sheets placed on a specific sheet feed source, or a change in the size or type of sheets set for each sheet feed source.

If a user instruction is received from the operation display unit 210 (YES in step S1313), the processing proceeds to step S1314. In step S1314, processing to be subsequently performed is changed depending on the contents of the instruction. If one of the buttons 1402 to 1406 is selected, a notification indicating the selected sheet feed source is transmitted to the subsequent step (step S1310), and then the sheet feed determination processing is completed. On the other hand, if pressing of the cancel button 1407 is detected, the print processing itself is completed.

If it is determined that there is no suitable sheet feed source in step S1309 (NO in step S1309), the execution of the print job may be cancelled. This makes it possible to prevent execution of the print job in which "use the reserved sheet feed source" is not designated and the sheet feed unit for which the reserved sheet feed source is designated is used.

When the print job in which "use the reserved sheet feed source" is not designated is executed through the processing illustrated in Fig. 13 described above, the reserved sheet feed source can be prevented from being automatically selected. Further, when the print job in which "use the reserved sheet feed source" is not designated is executed, an error notification can be displayed with the sheet feed source set in the print job as the reserved sheet feed source, making it possible to prevent the user from using the reserved sheet feed source by mistake. In other words, sheets to be used for a specific purpose is prevented from being used for another purpose. Further, since the sheet feed source reservation processing is performed independently of the print job execution processing, the reservation setting for each sheet feed source is not automatically cancelled even after the execution of the print job is completed, so that the served state of the sheet feed source can be maintained for a long period of time.

The screen control processing illustrated in Fig. 16 and the like makes it possible to prevent all the sheet feed sources from being reserved at once in the sheet feed source reservation processing.

A second embodiment will be described. While the first embodiment described above illustrates a method for preventing all the sheet feed sources from being reserved at once, in the second embodiment, a method will be described for setting a limitation on the reservation operation by setting an upper limit number of sheet feed sources that can be put into the reserved state in advance and performing the reservation operation based on the upper limit number.

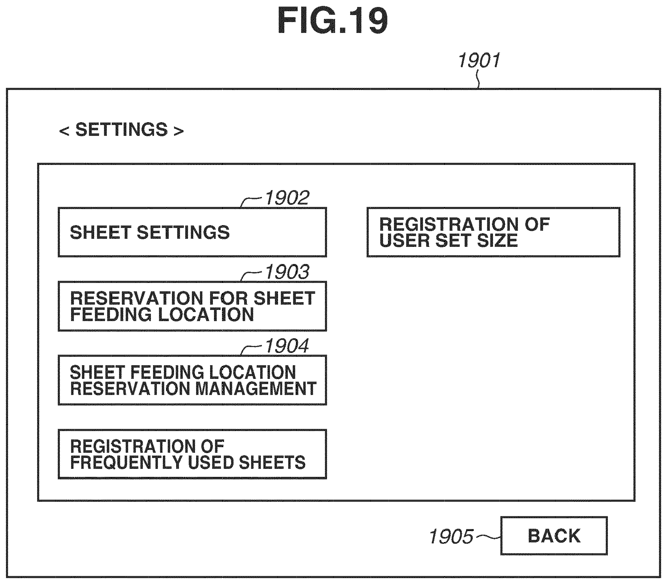

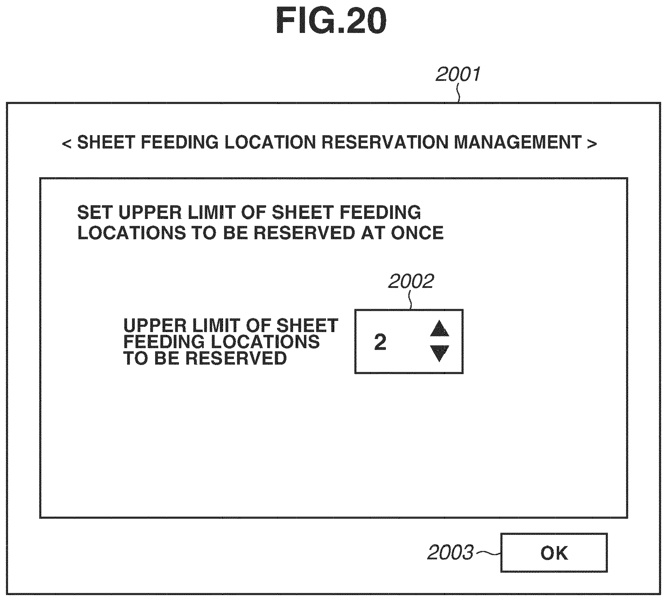

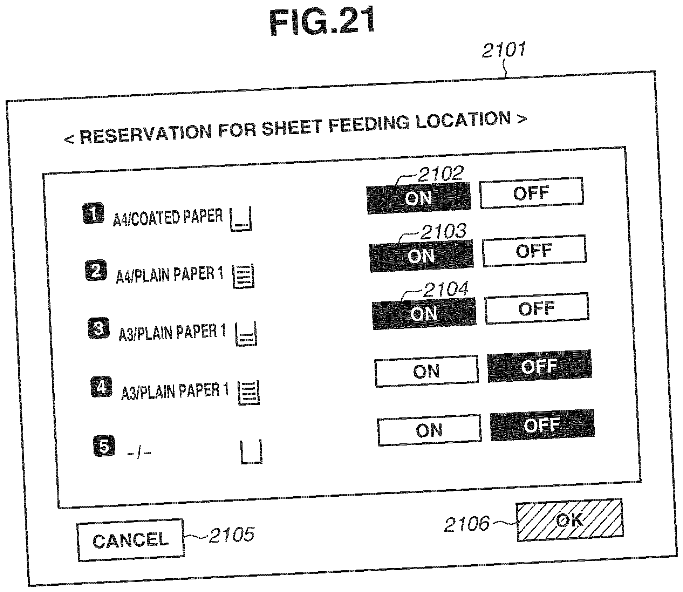

A setting screen 1901 illustrated in Fig. 19 is a screen displayed on the operation display unit 210 when the CPU 202 detects pressing of the settings button 506 on the home screen 501 illustrated in Fig. 5 described above. The setting screen 1901 differs from the settings screen 601 described above in that a button 1904 for making advanced settings for setting a limitation on the sheet feed source reservation processing is arranged. The sheet feeding location reservation management button 1904 can be used only by an administrator of the image forming apparatus 100. Upon detecting pressing of the sheet feeding location reservation management button 1904, the CPU 202 causes the operation display unit 210 to display a screen 2001 for setting an upper limit number of sheet feed sources that can be put into the reserved state at once. An upper limit number is set from a pull-down menu 2002 on the screen 2001. Fig. 20 illustrates an example where two sheet feed sources are set as the upper limit number. Processing for setting a limitation on the sheet feed source reservation operation in this setting example will be described with reference to Fig. 21. In the example illustrated in Fig. 16 described above, the CPU 202 performs screen control processing to prevent the reservation operation for all the sheet feed sources from being determined by displaying the button 1605 in a hatch pattern when all the sheet feed sources are put into the reserved state at once. On the other hand, in the present embodiment, if the number of reserved sheet feed sources exceeds the upper limit number set on the pull-down menu 2002, the CPU 202 performs screen control processing by displaying a button 2106 in a hatch pattern. On a screen 2101 illustrated in Fig. 21, buttons 2102, 2103, and 2104 corresponding to the sheet feed cassettes 102, 103, and 104, respectively, are selected to put the respective sheet feed cassettes into the reserved state. In this case, the number of sheet feed cassettes put into the reserved state exceeds the upper limit number. For this reason, the button 2106 for determining the reservation operation is displayed in a hatch pattern to prevent the button 2106 from being selected. This makes it possible to set a limitation on the sheet feed source reservation operation using the number of sheet feed sources set by the administrator of the image forming apparatus 100 as the upper limit number. Consequently, the sheet feed source for printing office documents can be secured.

The method for setting a limitation on the reservation operation as illustrated in Figs. 17 and 18 according to the first embodiment can also be applied to the second embodiment.

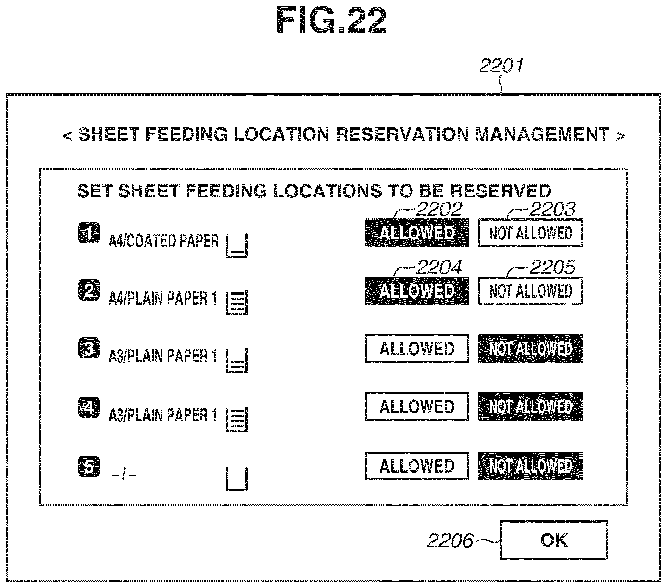

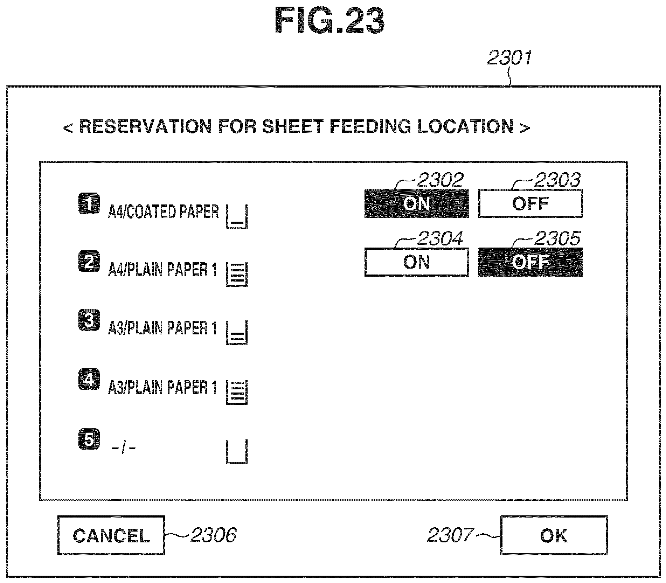

A third embodiment will be described. In the third embodiment, a method will be described for setting sheet feed sources that can be reserved in advance and setting a limitation on the sheet feed source reservation operation based on the setting, with reference to Figs. 22 and 23.

A sheet feeding location reservation management screen 2201 illustrated in Fig. 22 is a screen displayed on the operation display unit 210 when the CPU 202 detects pressing of the sheet feeding location reservation management button 1904 described above. On the sheet feeding location reservation management screen 2201, setting buttons for allowing the reservation settings for the sheet feed cassettes 102 to 105 and the manual feed tray 106, respectively, are arranged. For example, a setting button 2202 is a button to be set for allowing the reservation setting for the sheet feed cassette 102. The administrator of the image forming apparatus 100 makes a setting as to whether to allow the reservation setting for the corresponding sheet feed source by selecting the setting button corresponding to the sheet feed source.

The management screen 2201 illustrates a state where the reservation settings for the sheet feed cassette 102 and the sheet feed cassette 103 are allowed. Processing for setting a limitation on the sheet feed source reservation operation in this setting example will be described with reference to Fig. 23. In the example illustrated in Fig. 16 described above, the reservation ON/OFF setting buttons corresponding to all the sheet feed sources, respectively, are arranged, while in the example illustrated in Fig. 23, the CPU 202 performs screen control processing in such a manner that only the setting buttons corresponding to the sheet feed cassettes 102 and 103, respectively, for which the reservation setting is allowed are displayed on the management screen 2201. This makes it possible to set a limitation on the reservation operation in such a manner that the reservation setting can be made for only the sheet feed sources that are allowed to be reserved by the administrator of the image forming apparatus 100. Consequently, the sheet feed source for printing office documents can be secured. The ON/OFF button corresponding to each sheet feed source that is not allowed to be reserved may be displayed in a hatch pattern. Even when the button is selected, the setting corresponding to the button is not reflected.

The above-described configuration makes it possible to set a limitation on the reservation setting for each sheet feed source, preventing the user from making a reservation for an unfavorable sheet feed source in advance.

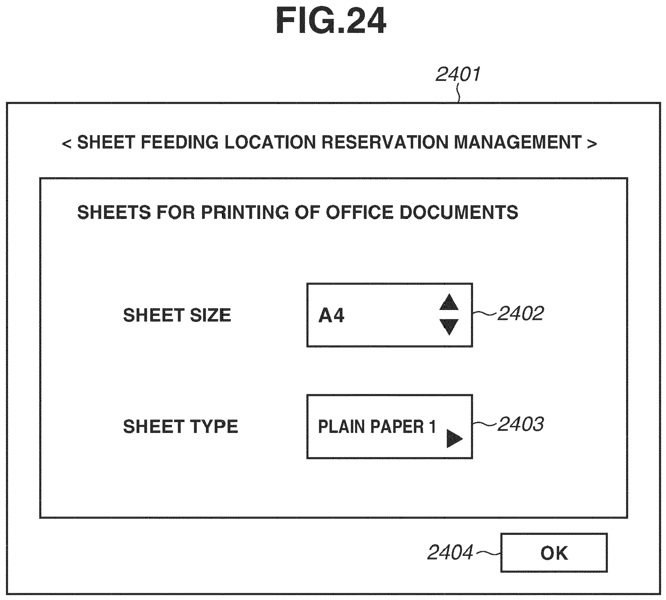

A fourth embodiment will be described. In the fourth embodiment, reservation control processing for allowing reservation settings for sheet feed sources other than a sheet feed source for use in printing office documents on condition that sheets for use in printing office documents are placed on the sheet feed source will be described with reference to Figs. 24 to 26.

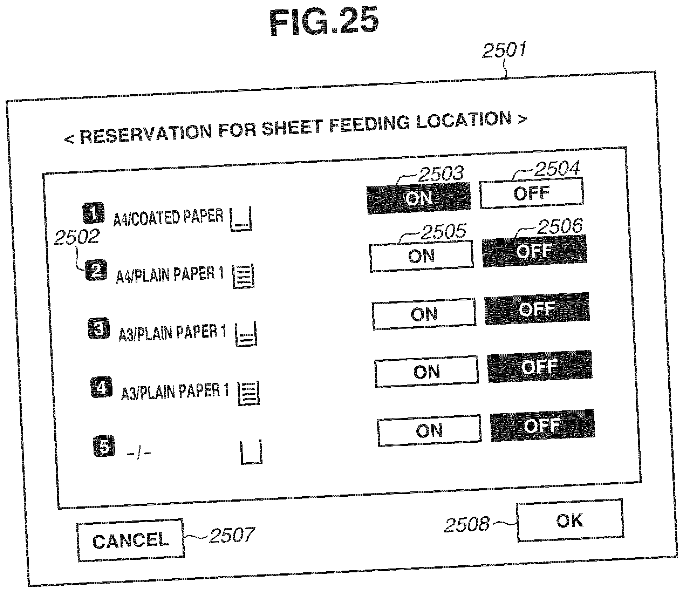

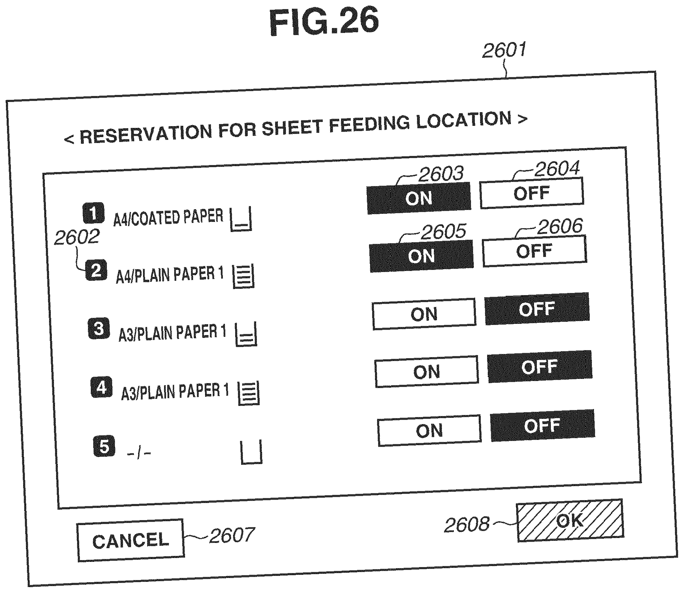

A management screen 2401 illustrated in Fig. 24 is a screen displayed on the operation display unit 210 when the CPU 202 detects pressing of the sheet feeding location reservation management button 1904 described above. On the sheet feeding location reservation management screen 2401, entry fields 2402 and 2403 for setting a sheet size and a sheet type, respectively, of sheets for use in printing office documents are arranged. The entry field 2402 is an entry field for setting a sheet size. Any one of sheet sizes in a size list (not illustrated) can be set in the entry field 2404. The entry field 2403 is an entry field for setting a sheet type. One of sheet types in a sheet type list (not illustrated) can be set in the entry field 2404. The administrator of the image forming apparatus 100 uses these two entry fields 2402 and 2403 to make sheet settings. On the management screen 2401, A4-size plain paper 1 is set. Processing for setting a limitation on the sheet feed source reservation operation in this setting example will be described with reference to Figs. 25 and 26.

Fig. 25 illustrates an example where A4-size plain paper 1 that matches the size and type of sheets for use in printing office documents set on the sheet feeding location reservation management screen 2401 as described above is placed on the sheet feed cassette 103 as indicated by an area 2502. The management screen 2401 indicates a state where a button 2503 for making a reservation for the sheet feed cassette 102 is pressed. However, the sheet feed cassette 103 is not in the reserved state, and thus a button 2508 for determining the reservation operation can be pressed.

On the other hand, Fig. 26 illustrates a state where the reservation setting is made for the sheet feed cassette 102 and for the sheet feed cassette 103. In this case, the CPU 202 performs screen control processing to prevent a button 2608 for determining the reservation operation from being pressed. Thus, if at least one of the sheet feed sources on which sheets set on the sheet feeding location reservation management screen 2401 are placed is not in the not reserved state, the button for determining the reservation operation can be prevented from being pressed.

Consequently, at least one sheet feed source for printing office documents can be secured.

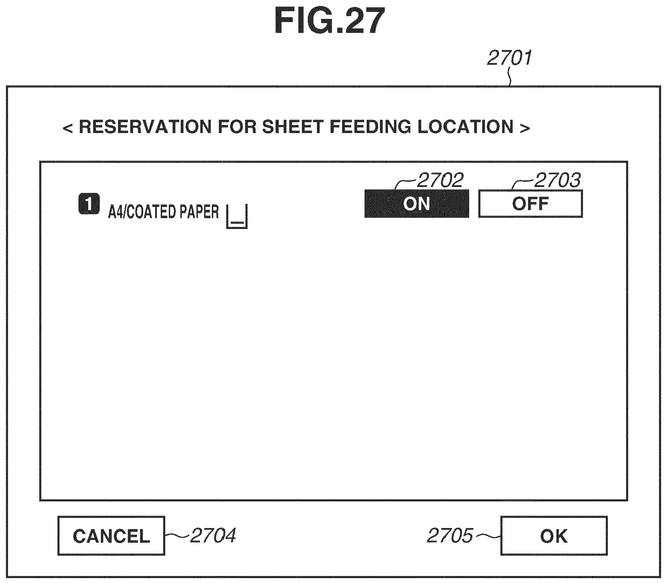

A fifth embodiment will be described. In the fifth embodiment, reservation control processing for a configuration example of the image forming apparatus 100 including only one sheet feed source will be described with reference to Fig. 27.

In the example illustrated in Fig. 16 described above, if all the sheet feed sources are put into the reserved state at once, the CPU 202 performs screen control processing by displaying the OK button 1605 in a hatch pattern to prevent the reservation operation from being determined. On the other hand, if the image forming apparatus 100 includes only one sheet feed source as illustrated in Fig. 27, the CPU 202 exceptionally performs screen control processing in such a manner that a button 2705 for determining the reservation operation can be selected, without masking the button 2705, even when the button 2702 for making a reservation for the sheet feed source is pressed, and the CPU 202 changes the setting. In this case, the sheet feed source for printing office documents cannot be secured. However, if the image forming apparatus 100 includes only one sheet feed source, the original purpose of preventing special print sheets for in-office printing from being used by mistake can be prioritized.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc^{™} (BD)), a flash memory device, a memory card, and the like.

While the present invention has been described with reference to embodiments, it is to be understood that the invention is not limited to the disclosed embodiments, but is defined by the scope of the following claims.

## Claims

1. An image forming apparatus (100) comprising:
a plurality of sheet feed units (208);
job reception means (206) configured to receive a print job;
execution means (110) configured to execute the received print job based on an execution instruction;
instruction reception means (210) configured to receive a reservation instruction to make a reservation for at least one sheet feed unit of the plurality of sheet feed units (208); and
identification means (202) configured to identify a sheet feed unit from the plurality of sheet feed units (208) based on a setting for the received print job,
wherein in a case where issuance of the execution instruction for a print job in which no reservation setting is made and the sheet feed unit for which the reservation instruction is received by the instruction reception means (210) is identified, the execution means (110) is configured not to execute the print job, and
wherein the instruction reception means (210) is configured to set a limitation on the reservation instruction to prevent an instruction to make a reservation for all the sheet feed units (208) of the plurality of sheet feed units (208) from being issued.

2. The image forming apparatus (100) according to claim 1, wherein the identification means is configured to identify the sheet feed unit from the plurality of sheet feed units (208) based on a sheet size set in the received print job.

3. The image forming apparatus (100) according to claim 2, wherein the sheet feed unit identified by the identification means is the sheet feed unit for which a sheet size identical to the sheet size set in the print job is set.

4. The image forming apparatus (100) according to any one of claims 1 to 3, further comprising cancellation means configured to cancel the reservation for the sheet feed unit in response to opening of the sheet feed unit for which the reservation instruction is received by the instruction reception means (210).

5. An image forming apparatus (100) comprising:
a plurality of sheet feed units (208);
job reception means (206) configured to receive a print job;
execution means (110) configured to execute the received print job based on an execution instruction;
instruction reception means (210) configured to receive a reservation instruction to make a reservation for at least one of the plurality of sheet feed units (208); and
identification means configured to identify a sheet feed unit from the plurality of sheet feed units (208) based on a setting for the received print job,
wherein in a case where issuance of the execution instruction for a print job in which no reservation setting is made and the sheet feed unit for which the reservation instruction is received by the instruction reception means (210) is identified, the execution means (110) is configured not to execute the print job, and
wherein in a case where the instruction reception means (210) receives an instruction to make a reservation for all the sheet feed units (208) of the plurality of sheet feed units (208), the reservation for the sheet feed units (208) is not made based on the instruction.

6. The image forming apparatus (100) according to claim 5, wherein in a case where the instruction reception means (210) receives an instruction to make a reservation for all the sheet feed units (208) of the plurality of sheet feed units (208), an error notification is issued without making the reservation for the sheet feed units (208) based on the instruction.

7. The image forming apparatus (100) according to claim 5, wherein the identification means is configured to identify the sheet feed unit from the plurality of sheet feed units (208) based on a sheet size set in the received print job.

8. The image forming apparatus (100) according to claim 7, wherein the sheet feed unit identified by the identification means is a sheet feed unit for which a sheet size identical to the sheet size set in the print job is set.

9. The image forming apparatus (100) according to any one of claims 5 to 8, further comprising cancellation means configured to cancel the reservation for the sheet feed unit in response to opening of the sheet feed unit for which the reservation instruction is received by the instruction reception means (210).

10. An image forming method comprising:
receiving a print job (S1101);
executing the received print job (S1002) based on an execution instruction;
receiving a reservation instruction (S403) to make a reservation for at least one sheet feed unit of a plurality of sheet feed units (208); and
identifying a sheet feed unit (S1203) from the plurality of sheet feed units (208) based on a setting of the received print job,
wherein in a case where issuance of the execution instruction for a print job in which no reservation setting is made and the sheet feed unit for which the reservation instruction is received is identified, the print job is not executed, and
wherein a limitation is set on the reception of the reservation instruction to prevent an instruction to make a reservation for all the sheet feed units (208) of the plurality of sheet feed units (208) from being issued.

11. An image forming method comprising:
receiving a print job (S1101);
executing the received print job (S1002) based on an execution instruction;
receiving a reservation instruction (S403) to make a reservation for at least one sheet feed unit of a plurality of sheet feed units (208); and
identifying a sheet feed unit (S1203) from the plurality of sheet feed units (208) based on a setting for the received print job,
wherein in a case where issuance of the execution instruction for a print job in which no reservation setting is made and the sheet feed unit for which the reservation instruction is received is identified, the print job is not executed, and
wherein even when an instruction to make a reservation for all the sheet feed units (208) of the plurality of sheet feed units (208) is received, the reservation for the sheet feed units (208) is not made based on the instruction.

12. A computer program comprising instructions which, when the program is executed by an image forming apparatus (100), cause the image forming apparatus (100) to carry out the method of claim 10 or 11.

13. A computer-readable data carrier having stored thereon the computer program of claim 12.
